# EUROPÄISCHE PATENTSCHRIFT

(11) **EP 2 059 759 B1**
(45) Veröffentlichungstag und Bekanntmachung des Hinweises auf die Patenterteilung: **25.07.2012**
(21) Anmeldenummer: 07801252.3
(22) Anmeldetag: 13.08.2007
(51) Int. Cl.: F27D 3/12

(54) **EINRICHTUNG ZUM WARMHALTEN VON AUS EINER STRANGGIESSANLAGE AUSTRETENDEN BRAMMEN**
DEVICE FOR KEEPING WARM SLABS EMERGING FROM A CONTINUOUS CASTING INSTALLATION
DISPOSITIF DE MAINTIEN À TEMPÉRATURE DE BRAMES SORTANT D'UNE INSTALLATION DE COULÉE CONTINUE

(30) Priorität: 01.09.2006 DE 102006041150; 27.03.2007 DE 102007016100
(43) Veröffentlichungstag der Anmeldung: 20.05.2009
(73) Patentinhaber: SMS Siemag AG, 40237 Düsseldorf (DE)
(72) Erfinder: FEST, Thomas, Pittsburgh, PA 15212-5852 (US); HOVESTÄDT, Erich, 46414 Rhede (DE); MOSSNER, Wolfgang, 40699 Erkrath (DE)
(74) Vertreter: Klüppel, Walter
(86) Internationale Anmeldenummer: PCT/DE2007/001462
(87) Internationale Veröffentlichungsnummer: WO 2008/025325

(56) Entgegenhaltungen:
- EP-A- 0 042 656
- EP-B- 0 648 552
- DE-A1- 3 201 417
- JP-A- 62 222 015
- OSTAPENKO A L ET AL: "OPERATION OF TEMPERATURE CONTROLLING DEVICES IN SLABBING MILL-CONTINUOUS WIDE STRIP MILL LINE" STEEL IN THE USSR, METALS SOCIETY, LONDON, GB, Bd. 18, Nr. 3, 1. März 1988 (1988-03-01), Seiten 126-128, XP000023497 ISSN: 0038-9218

## Beschreibung

Die Erfindung betrifft Einrichtung zum Warmhalten von aus einer Stranggießanlage austretenden Brammen, die auf einem Rollgang zur Weiterverarbeitung transportierbar sind.

Einer der größten Kostentreiber bei den Betreibern von Stahlwerken und Stranggießanlagen ist die Energie, die zum größten Teil zur Wärmeerzeugung verwendet wird.

Die zur Erschmelzung eingesetzte große Energiemenge wird dem Stahl in der Stranggießanlage zwecks herbeiführen der Erstarrung wieder entzogen. Nach diesem Prozess wird eine ebenfalls energieintensive Wiedererwärmung notwendig um die geforderte Eingangtemperatur des Warmwalzprozesses zu erreichen.

Aus der DE 43 33 717 ist es bekannt, für den Transport von Coils, diesen beheizbare Wärmehauben zuzuordnen, die mit Quertransportfahrzeugen baueinheitlich verbunden sind.

Ferner ist es aus der EP 648 552 B1 bekannt, bewegliche Förderer auch für Brammen vorzusehen, die aus einem beweglichen Unterteil mit darin angeordneten Rollen bestehen, auf denen die Bramme liegt, und einer isolierten Haube, die auf das Unterteil aufsetzbar ist.

Aufgabe der Erfindung ist es, mit der Optimierung der Energiebilanz des Prozesses zwischen Stranggießanlage und Warmwalzwerk die Bramme möglichst heiß zu halten, so dass die kalorische Mitteltemperatur möglichst hoch ist. Dabei soll möglichst viel Wärme bis zum Einsatz im Walzwerk konserviert werden, um die Kosten für die Wiedererwärmung zu minimieren.

Gelöst wird diese Aufgabe erfindungsgemäß durch eine Einrichtung zum Warmhalten von aus einer Stranggießanlage austretenden Brammen, die auf einem Rollgang zur Weiterverarbeitung transportierbar sind, die gekennzeichnet ist durch ein auf den Rollgang auflegbares und darauf förderbares Auflageteil zur Aufnahme einer Bramme sowie eine auf das Auflageteil aufsetzbare und dieses weitgehend umschließende Isolierbox.

Aus einer Stranggießanlage tritt der Strang, beispielsweise im Brammenformat, kontinuierlich aus und wird dann in einzelne Brammen oder Brammensegmente zerlegt.

Der Transport erfolgt dabei im Allgemeinen auf einem Rollgang, der sich unmittelbar an die Rollenführung der Strangführung abschließt. Dies gilt auch für den weiterführenden Transport, wenn sich beispielsweise ein In-line-Walzen anschließt.

Um nun Temperaturverluste auf dem Weg zu vermeiden, kommt die erfindungsgemäße Einrichtung zum Einsatz.

Gemäß der Erfindung sind entweder nur zwei Isolierboxen pro Strang für den Normalbetrieb erforderlich oder, bei Einsatz von z. B. 3 Isolierboxen pro Strang existiert mindestens eine "Parkposition", in der eine Isolierbox eine andere Isolierbox passieren lassen kann.

Alternativ kann es sehr vorteilhaft sein, die Isolierboxen direkt als Zwischenspeicher zu verwenden, sofern die Pufferzeit einige Stunden nicht übersteigt.

Es ist denkbar die Isolierboxen zusätzlich mit einer Beheizung zu versehen. Hierbei kann es sich um Brenner oder eine elektrischer Widerstandsheizung handeln.

Möglich ist auch eine Induktionsheizungen oder eine zwischenzeitliche Einführung in einen Rollenherdofen, der die Aufgaben Konservieren und Homogenisieren der Temperatur übernimmt.

Der Transport kann auch hier mit den Isolierboxen erfolgen, die direkt nach der Stranggießanlage beladen und unmittelbar vor der Kombination aus Induktionsheizung und Rollenherdofen entladen werden.

Im Übrigen ist mit den Isolierboxen auch ein Transport von Paketen, also gestapelten Brammen möglich.

Ein Vorteil des Transportes in Paketen ist, dass am Ofen des Walzwerkes immer mehrere Produkte gleichzeitig chargiert werden können. Der Ofen muss dann nur einmal für mehrere Produkte geöffnet werden und nicht für jedes Produkt separat und verliert somit deutlich weniger Wärme.

Die Erfindung soll nachfolgend mit Bezug auf die Zeichnungen erläutert werden.

Dabei zeigt:

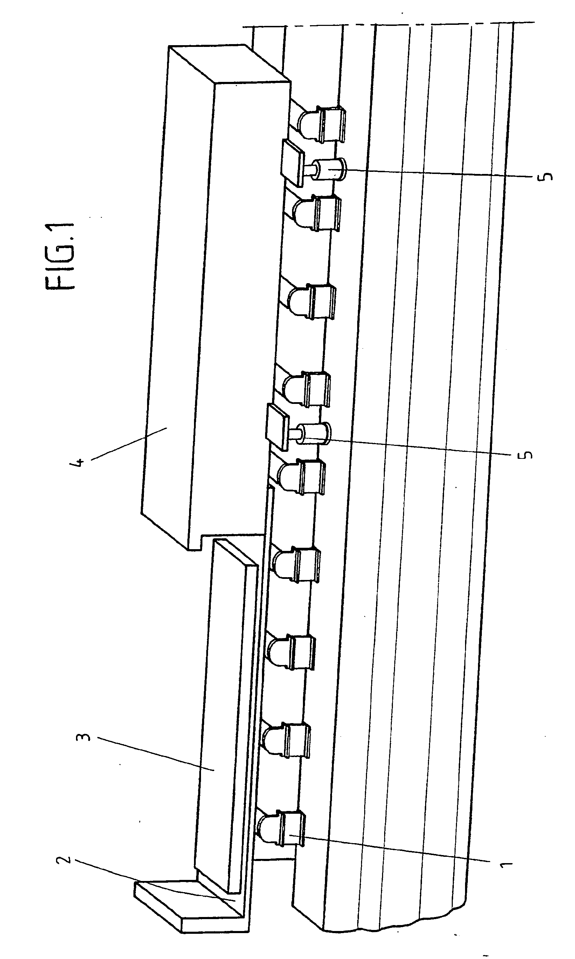

- Fig.1: die erfindungsgemäße Einrichtung im offenen und

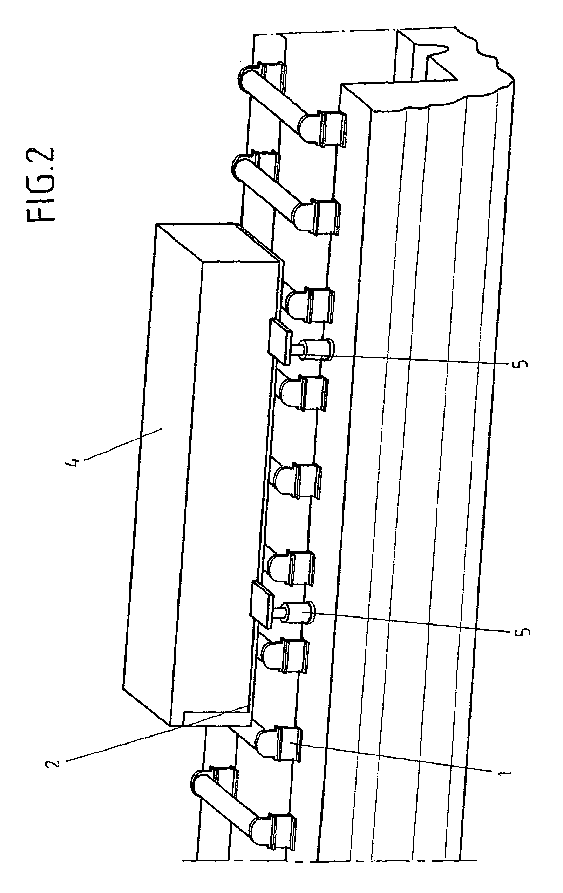

- Fig.2: im geschlossenen Zustand
- Fig. 3-5: eine beispielhafte Beladung der erfindungsgemäßen Einrichtung in verschiedenen Stadien.

Die erfindungsgemäße Einrichtung zum Warmhalten von aus einer Stranggießanlage austretenden Brammen besteht aus einem auf einem Rollgang 1 förderbaren, isolierten Auflageteil 2 zur Aufnahme einer Bramme 3 und einer Isolierbox 4, in die das Auflageteil einschiebbar ist. Hierzu ist die Isolierbox tunnelartig ausgebildet, also in Längsrichtung - und damit in Richtung des Rollganges - offen, während die andere Seite verschlossen ist. Damit kann das Auflageteil 2, das an seinem einen Ende eine abschließende Wand aufweist, deren Abmessung der lichten Öffnung der Isolierbox entspricht, in die Isolierbox eingeschoben werden und verschließt diese dann auch von dieser Seite.

Um dieses Einschieben oder Einführen des Auflageteiles in die Isolierbox zu ermöglichen, ist bei der in den Zeichnungen dargestellten Ausführungsform eine Hubeinrichtung für die Isolierbox vorgesehen. Diese besteht aus parallel zum Rollgang neben diesem angeordneten Hubzylindern 5. Mit diesen kann die Isolierbox etwas über die Rollganghöhe angehoben werden, so dass das Auflageteil auf dem Rotigang weiter befördert werden kann, bis es sich unter der Isolierbox befindet.

Die gesamte Einrichtung, bestehend aus Auflageteil, mit der darauf befindlichen Bramme oder mehreren Brammen und Isolierbox, kann dann auf dem Rollgang zur nächsten Arbeitsstation weiter befördert werden.

Nicht dargestellt ist in den Zeichnungen die Ausgestaltung der Isolierbox, die mit Heiz - und/oder Kühleinrichtungen versehen sein kann.

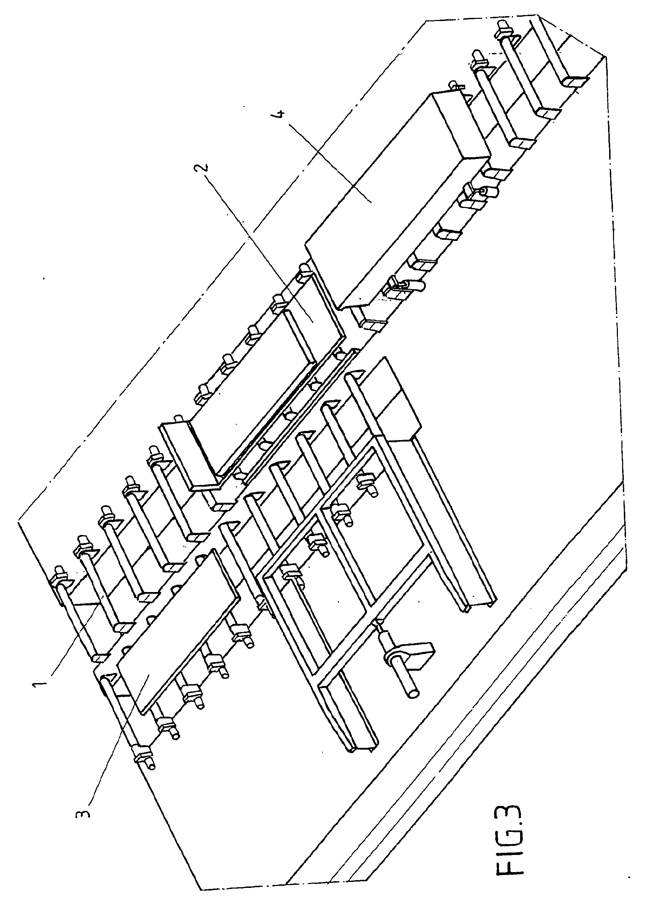

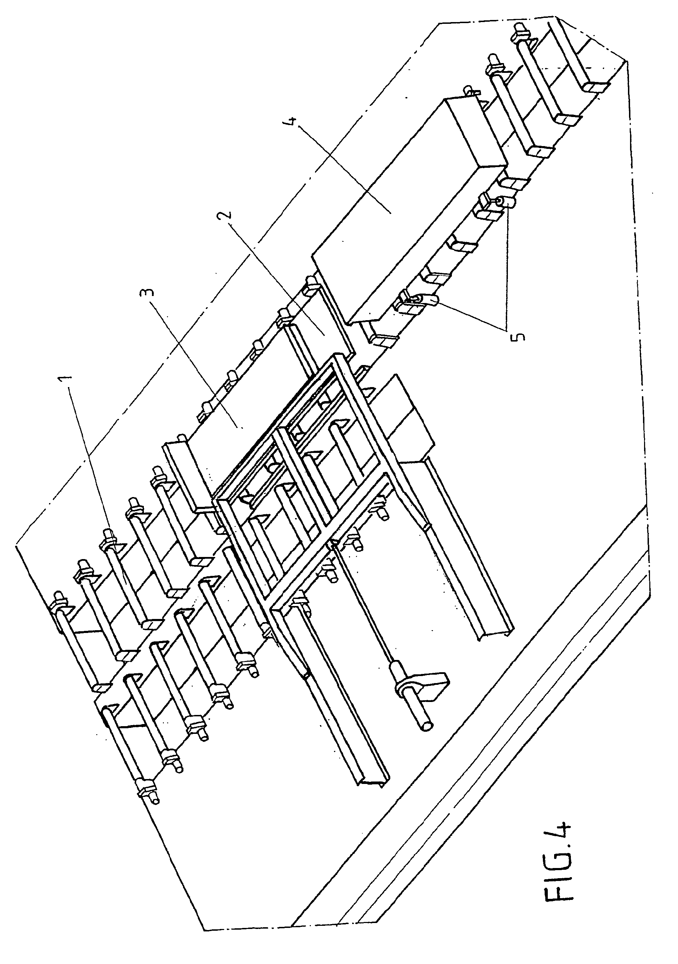

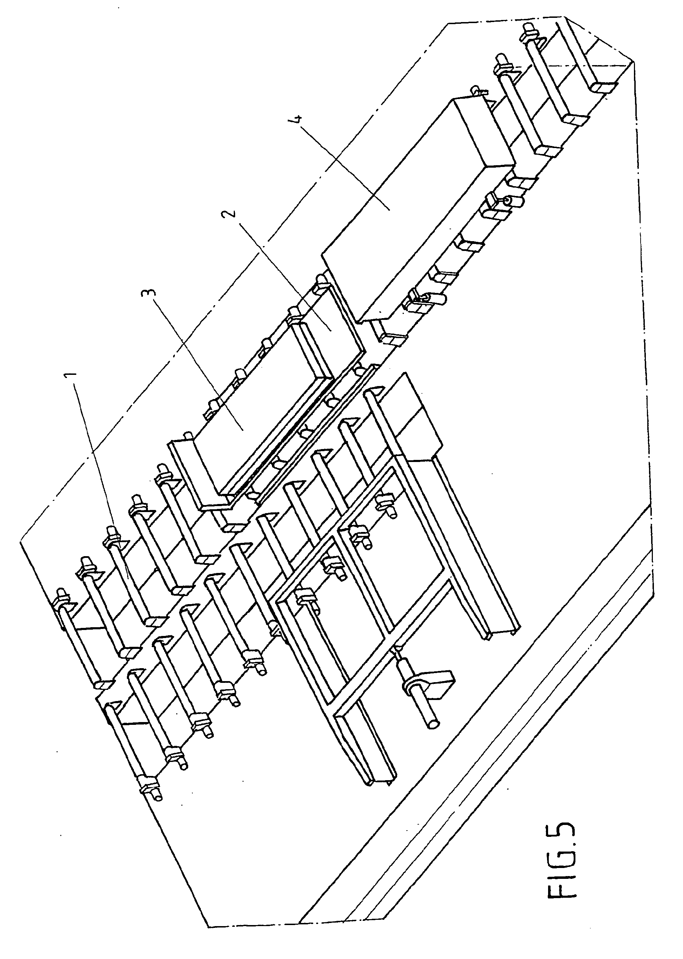

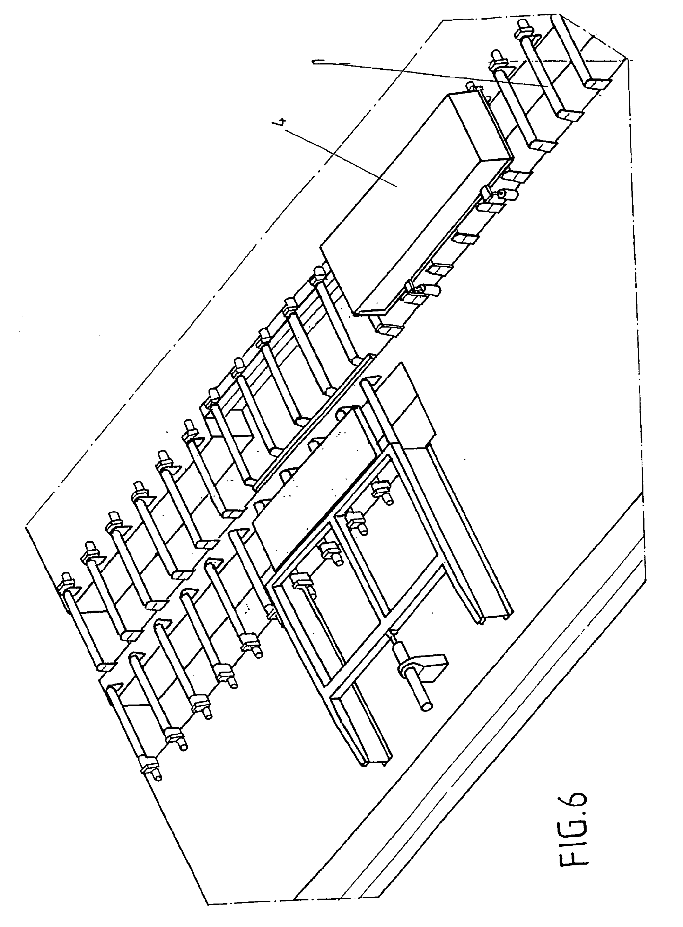

In den Figuren 3-6 ist ein Beispiel für eine Beladestation für das Auflageteil dargestellt. Im Einzelnen wird dabei die Bramme 3 von der Gießeinrichtung auf dem Rollgang 1 herangeführt. Erfolgt der Transport der Bramme von der Gießeinrichtung und anschließend die Weiterbeförderung auf ein und demselben Rollgang, so muss zum Beladen eine Querverschiebung vorgenommen werden, wobei hierzu ein paralleler Rollgang vorgesehen ist. Diese Querverschiebung erlaubt dann ein Bereitstellen des Auflageteiles, ein Heranführen der Bramme, und ein Queraufschieben der Bramme auf das Auflageteil, wie sich dies aus den Figuren 3 und 4 ergibt. Befindet sich die Bramme dann auf dem Auflageteil - wie dies die Figur 5 zeigt - dann kann dieses auf dem Rollgang in Richtung der angehobenen Isolierbox verschoben und in diese eingeführt werden (Fig. 6).

Beim Aufschieben liegt das Auflageteil auf einem heb-und senkbaren Rollgang, so dass auch mehrere Brammen übereinander geschoben werden können. Dies ist in der Figur 4 zu sehen, wo eine zweite Bramme aufgeschoben worden ist. In der Figur wird der Rollgang incl. Auflageteil und zwei Brammen wieder angehoben und es erfolgt dann die Einführung in die Isolierbox.

## Patentansprüche

1. Einrichtung zum Warmhalten von aus einer Stranggießanlage austretenden Brammen (3), die auf einem Rollgang (1) zur Weiterverarbeitung transportierbar sind,
**gekennzeichnet durch**
ein auf den Rollgang (1) auflegbares und darauf förderbares Auflageteil (2) zur Aufnahme einer Bramme (3) sowie eine auf das Auflageteil (2) aufsetzbare und dieses weitgehend umschließende Isolierbox (4).

2. Einrichtung nach Anspruch 1,
**dadurch gekennzeichnet,**
**dass** die Isolierbox (4) mit einer Heiz-/Kühleinrichtung versehen ist.

3. Einrichtung nach einem der vorstehenden Ansprüche,
**dadurch gekennzeichnet,**
**dass** die Isolierbox (4) horizontal auf das Auflageteil (2) aufschiebbar ist

4. Einrichtung nach einem der vorstehenden Ansprüche,
**dadurch gekennzeichnet,**
**dass** die Isolierbox (4) vertikal auf das Aufnahmeteil (2) auflegbar ist.

5. Einrichtung nach einem der vorstehenden Ansprüche,
**dadurch gekennzeichnet,**
**dass** die Isolierbox (4) vertikal gegenüber dem Auflageteil (2) anhebbar ist, so dass das Auflageteil horizontal aus der bzw. in die Isolierbox (4) schiebbar ist.

6. Einrichtung nach einem der vorstehenden Ansprüche,
**dadurch gekennzeichnet,**
**dass** das Auflageteil (2) eine sich senkrecht zur Längsrichtung erstreckende Rückwand aufweist und das die Isolierbox (4) zwei sich parallel zur Längsrichtung des Auflageteiles erstreckende Längswände sowie eine vordere Stirnwand aufweist, wobei die Wände so ausgebildet sind, dass der vom Auflageteil und der Isolierbox gebildete Innenraum vollständig eingehaust ist.

7. Rollgangsanordnung mit einer Einrichtung zum Warmhalten gemäß einem der vorhergehenden Ansprüchen 1-6,
**dadurch gekennzeichnet,**
**dass** dem üblichen, sich an die Stranggießanlage anschließenden Rollgang, eine Querverschiebung zugeordnet ist, mit der die Bramme vom Rollgang seitlich verlagerbar ist, dass mittels dieser Querverschiebung die Bramme auf das Auflageteil aufschiebbar ist und das eine gegenüber der Rollgangsebene erhöhte Aufnahmeeinrichtung für die Isolierhaube vorgesehen ist, so dass das Auflageteil in die Isolierhaube einschiebbar und diese anschließend auf das Auflageteil zum gemeinsamen Weitertransport absenkbar ist.

8. Rollgangsanordnung nach Anspruch 7,
**dadurch gekennzeichnet,**
**dass** der Bereich des Rollganges, in dem die Querverschiebung erfolgt, heb-und senkbar ausgebildet ist.

9. Rollgangsanordnung nach einem der vorstehenden Ansprüche 7 oder 8,
**dadurch gekennzeichnet,**
**dass** die Aufnahmeeinrichtung für die Isolierbox (4) aus beidseitig des Rollganges (1) angeordneten Hubzylindern (5) besteht.

## Claims

1. Device for keeping slabs (3), which are exiting a continuous casting plant and can be transported on a roller path (1) for further processing, warm, **characterised by** a support part (2), which can be placed on the roller path (1) and conveyed thereon, for receiving a slab (3) as well as an insulating box (4) placeable on the support part (2) and substantially enclosing this.

2. Device according to claim 1, **characterised in that** the insulating box (4) is provided with a heating/cooling device.

3. Device according to one of the preceding claims, **characterised in that** the insulating box (4) can be pushed horizontally onto the support part (2).

4. Device according to any one of the preceding claims, **characterised in that** the insulating box (4) can be placed vertically on the receiving part (2).

5. Device according to any one of the preceding claims, **characterised in that** the insulating box (4) can be lifted vertically relative to the support part (2) so that the support part can be pushed horizontally out of and into the insulating box (4).

6. Device according to any one of the preceding claims, **characterised in that** the support part (2) has a back wall extending perpendicularly to the longitudinal direction and that the insulating box (4) has two longitudinal walls extending parallel to the longitudinal direction of the support part as well as a front end wall, wherein the walls are so constructed that the interior space formed by the support and the insulating box is completely housed in.

7. Roller path arrangement with a device for keeping warm according to any one of the preceding claims 1 to 6, **characterised in that** associated with the usual roller path connected with the continuous casting plant is a transverse displacing means by which the slab is laterally displaceable from the roller path, that the slab can be pushed onto the support part by means of this transverse displacing means and that a receiving device, which is elevated relative to the plane of the roller path, for the insulating hood is provided so that the support part can be pushed into the insulating hood and this can be subsequently lowered onto the support part for further transport in common.

8. Roller path arrangement according to claim 7, **characterised in that** the region of the roller path in which the transverse displacement takes place is constructed to be raisable and lowerable.

9. Roller path arrangement according to one of the preceding claims 7 and 8, **characterised in that** the receiving device for the insulating box (4) consists of stroke cylinders (5) arranged on either side of the roller path (1).

## Revendications

1. Dispositif pour le maintien à température de brames (3) sortant d'une installation de coulée continue qui sont transportables vers la transformation ultérieure sur un train de rouleaux (1), **caractérisé par**
une pièce support (2) pouvant être placée et transportée sur un train de rouleaux (1), destinée à recevoir une brame (3) ainsi qu'une boîte d'isolation (4) pouvant être placée sur la pièce support (2) et l'entourant dans une large mesure.

2. Dispositif selon la revendication 1, **caractérisé**
**en ce que** la boîte d'isolation (4) est équipée d'un dispositif de chauffage/refroidissement.

3. Dispositif selon l'une quelconque des revendications précédentes, **caractérisé**
**en ce que** la boîte d'isolation (4) peut être glissée horizontalement sur la pièce support (2).

4. Dispositif selon l'une quelconque des revendications précédentes, **caractérisé**
**en ce que** la boîte d'isolation (4) peut être placée verticalement sur la pièce support(2).

5. Dispositif selon l'une quelconque des revendications précédentes, **caractérisé**
**en ce que** la boîte d'isolation (4) peut être soulevée verticalement par rapport à la pièce support (2), de manière telle que la pièce support peut être glissée horizontalement hors de ou, selon le cas, dans la boîte d'isolation (4).

6. Dispositif selon l'une quelconque des revendications précédentes, **caractérisé**
**en ce que** la pièce support (2) présente une paroi dorsale s'étendant perpendiculairement à la direction longitudinale et la boîte d'isolation (4) présente deux parois longitudinales s'étendant parallèlement à la direction longitudinale de la pièce support ainsi qu'une paroi frontale avant, les parois étant conçues de manière telle que l'espace interne formé par la pièce support et la boîte d'isolation est complètement enfermé.

7. Disposition de train de rouleaux présentant un dispositif pour le maintien à température selon l'une quelconque des revendications précédentes 1-6, **caractérisé**
**en ce que** le train de rouleaux usuel, se trouvant en aval de l'installation de coulée continue est associé à un déplacement transversal qui permet de déplacer les brames latéralement du train de rouleaux, en ce que ce déplacement transversal permet de glisser les brames sur la pièce support et un dispositif de réception plus élevé que le plan du train de rouleaux est prévu pour le capot d'isolation, de manière telle que la pièce support peut être glissée dans le capot d'isolation et celui-ci peut ensuite être abaissé sur la pièce support pour le transport ultérieur commun.

8. Dispositif de train de rouleaux selon la revendication 7, **caractérisé**
**en ce que** la zone du train de rouleaux dans laquelle a lieu le déplacement transversal est conçue de manière à pouvoir être soulevée et abaissée.

9. Dispositif de train de rouleaux selon l'une quelconque des revendications précédentes 7 ou 8, **caractérisé**
**en ce que** le dispositif de réception pour la boîte d'isolation (4) est constitué par des cylindres de soulèvement (5) disposés des deux côtés du train de rouleaux (1).
